(19) **Europäisches Patentamt**

**European Patent Office**

**Office européen des brevets**

(11) **EP 0 879 978 B1**

(12) **EUROPEAN PATENT SPECIFICATION**

(45) Date of publication and mention
of the grant of the patent:
**10.03.2004   Bulletin 2004/11**

(51) Int Cl.⁷: **F16K 1/00**, G05D 16/06,
F16K 31/126, F16K 3/18

(21) Application number: **97119158.0**

(22) Date of filing: **03.11.1997**

(54) **Gate valve**

Schieberventil

Robinet-vanne

(84) Designated Contracting States:
**AT BE CH DE DK ES FI FR GB GR IE IT LI LU MC
NL PT SE**

(30) Priority:  **04.11.1996  IT   VA960023**

(43) Date of publication of application:
**25.11.1998   Bulletin 1998/48**

(73) Proprietor: **Pozzi, Alfio
22020 Faloppio (Como) (IT)**

(72) Inventor: **Pozzi, Alfio
22020 Faloppio (Como) (IT)**

(74) Representative: **Sassi, Virginio
c/o Ufficio Brevetti Varesino
Viale Belforte 89
21100 Varese (IT)**

(56) References cited:
**AU-A- 7 026 274          DE-C- 803 624
FR-A- 539 682             US-A- 2 195 337
US-A- 3 517 697**

## Description

The present invention relates to a gate valve in. which the suspensions of its movable parts and an organ for its automatic lift control render it particularly adapted to control, automatically a pressure reducing valve. In such gate valve the liquid flow to be controlled is rectilinear, since it is not disturbed by the rectilinear normal excursion, of the components of the sealing coupling. Such suspensions, the sealing and the condition of the operating range of the gate valve, assure to the reducer substantially null response times. and divergence from the set pressure; thus its operation is not conditioned by variation in the pressure to be reduced.

A gate valve as defined in the preamble of claim 1 is well-known in the prior art.

At the present state of the art gate valves have been employed in the field of the domestic taps, substantially only as gate taps of poor quality. Indeed to them are not required. the utmost performances, since, even if leaking would occur, even of a certain amount, they would be, in general, tolerated since they would flow inside the system. The gate valves are as well largely employed in the field of mixers, of middlehigh quality. Such mixers are characterised by sealing means comprising at least a ceramic member. When the ceramic members comprising the seal are two,. the arrangement dictates particular attention in making them and this involves costs, which added to the cost of the materials and to that of particular workings, dictated high prices of sale, warranted only by the high performances obtainable from such goods. However, the field wherein these mixers are applied, is that regarding cold and warm water pipes, at the maximum of 3/8", involving thus strokes in the range of 4 - 6 mms, in longitudinal direction or sense of sealing coupling and opening, as well as tangential mixing strokes, in the order of 6 - 10 mms. Thus, the subdivision of the stroke in two steps, eliminated the most difficult problems, set about by: a) longer strokes, which are demanded by the gate valve, with respect to the valve of the obturator kind, i.e., those in which the cover member lift and fall vertically from and to the seat member; b) higher pressures which the valve must hold, specially when its operation take place with fast opening and closing means; c) by friction which: specially when the pressures involved are relevant, are very high. Regarding the known pressure reducing valves, none of them has a sliding sealing coupling, nor provides ceramic sealing coupling members, but they have the same sealing coupling, on a plane substantially normal to the axes of the spring or the like, which comprises the essential member providing the reduction. Told in other words, the pressure reducing valves of the present state of the art, have the valve sealing coupling which is of the obturator kind i.e. those in which the cover member lift and fall vertically from and to the seat member. Such kind. of valve or sealing coupling presents defects which up to now have demonstrated to be without limit. While in other applications, as aforesaid, the change from the valve of the obturator kind to the gate valve is still largely in force, in the fields of the pressure reducing valve difficulties were encountered which seemed to be unbearable and such to suggest the preference for the valves of the obturator kind, despite to their drawbacks. The drawbacks encountered are substantially three. The first is that it is sufficient an alien body, even small, which is sandwiched between the two members of the sealing coupling of the obturator kind valve, to damage the pressure reducing valve. And that this happens is not. at all rare, since such particles, i.e., such those of limestone, are a number and the probability that the interference occurs is extremely high, since the incipient opening of the obturator, filtrates the liquid and the alien bodies have the trend to go where they are more fastidious, without any possibility to pass beyond. To obviate to this drawback is substantially indispensable to apply; upstream of the obturator kind valve, a filter, whose operation, in regime of high pressures, such those contemplated in the case of the pressure reducing valve normally are to be controlled, is strongly critical; obviously its damage would put substantially in blackout the obturator kind valve. The second drawback is that the sealing coupling of the obturator kind valve, at this stage of apparatuses, with couplings of poor precision, endure components (sealings) made of elastomeric material. When the pressures are elevated and the presence of alien particles is high too, the life of the sealings of these valves is correspondingly very short. It is then to be noted that as a water drop dig a stone it wears the seal and the corresponding antagonist surfaces. For these reasons quite early the conditions are reached, whereby the drawbacks, involved by the application of the pressure reducing valve fitted with a valve of the obturator kind, overcome the advantages. The third drawback is the acoustic pollution accompanying the use of the pressure reducing valve fitted with a valve of the obturator kind. In practice the valve having a sealing coupling of the obturator kind operates optimally and has a very long life when the pressures involved are comprised in a range between 3 and 4 atmospheres. It would be exceedingly contradictory to install in a system a pressure reducing valve which has the same drawbacks that are intended to be eliminated, for protecting the same system. Considering that the pressure reducing valve is a perfective installation, when the drawbacks, accompanying it, merely balance the advantages or whereas they do not even balance them, to employ it would be only a. complication of the system embodying it. Since a sealing coupling of the obturator kind, includes an elastomeric seal and has the task to operate at a pressure range superior than 3-4 atmosphere, do not make other then to aggravate the problems instead to solve them also for the corollary difficulties which would be subjected to a filter which as aforesaid must be applied upstream. Indeed, on a few known pressure reducing valves, rooms of compensation have been provided, which have the aim to balance the effects of the intense pressures: however the basic problem, due to the sealing coupling of the obturator kind, remains.

The invention as claimed is intended to remedy these drawbacks and to offer, in addition, various advantages. The inventor, by a flash of resolving intuition, has conceived a valve with a gate sealing coupling and. a drive for its automatic control, which are particularly suitable to be employed singularly or jointly in an automatic pressure reducing valve, whereby the rectilinear flow of the liquid to be controlled is provided, which is not disturbed by the normal, rectilinear sliding of the components of the sealing and adjusting coupling.

The gate valve, according to the present invention is characterised by suspensions, sealings and conditions of the operative environment, assuring, when applied to a pressure reducing valve, time and shifting of response of the set pressure substantially null, which are not substantially conditioned by possible variations in the pressure to be reduced. Such an arrangement pertains to a field of dimensions and qualities which range beyond those of conventional mixers and other conventional uses of the sliding ceramic sealing members.

Since the necessary stroke to be slid by gate valve is longer then that of the obturator kind valve, i.e. is comprised between three and six times as such, there is the need to employ, to provide such longer stroke, spring means which are different from the conventional ones, comprised by a spiral spring and applied axially and directly to the membrane driving the sliding. According to a preferred embodiment of the present invention, the spring means controlling the membrane, per se known, but providing a longer excursion, is comprised by a room filled with a gas. In fact these pneumatic means are characterised by a load variation due to the extension of the stroke similar to that of the obturator for shorter strokes.

The motion and the sealing of the components of the gate coupling, according to the present invention, are fulfilled by components of ceramic material or the like. Such components of ceramic material, in order to suitably fulfil their function, must have some particularities: such as the material, the form of each of them and the reciprocal shape and that of the coupling, as well as the surface finishing and their hardness. The same sliding of the components of the sealing coupling, needs arrangements in order to drastically reduce, the friction between the sliding components. Other arrangements are provided. to reduce the perverse effect of the pressure acting on the sliding member of the sealing coupling of the valve.

According to the present invention the gate valve is necessarily shaped as a parallelepiped with a passage hole provided from a main surface to a main surface. The main surfaces thereof have an area which is at least four times as large as the area of the passage hole. Since this area should be subjected to the inlet pressure and this would act against the whole surface, except that of the holes, the friction encountered to slide such parallelepiped would require a lot of power. This high force, may be available in the case of many known valves in use, but it is not available in the pressure reducing valves, wherein the provision of powerful spring means would result in a very slow response of the pressure reducing valve. According to the specific principle of the present invention the pressure acting on the parallelepiped is born by rolling means including a blade, whereby the sliding occurs frictionfree, while the sealing member, it too of ceramic material, co-operating with the movable member of the gate valve is mounted upstream of the same gate valve and has substantially annular cross section, whereby to offer to the inlet liquid (in the case of the pressure reducing valve the pressure to be reduced) a surface quite smaller then the main surface of the parallelepiped and hardly sufficient to tot a congruous sealing engagement between the two members. In correspondence of the two sealing surfaces, both of ceramic material, their walls are very smooth, whereby their friction coefficient is in the range of 0,15-0,25. Thus this structural arrangement consent to reduce the sealing contact surface and in a fashion directly proportional, the friction resistance necessary to move the gate valve. Thus, in a pressure reducing valve, fed with inlet water at 10 atmospheres and having a hole of 17 mm of diameter, are sufficient Kg 4.5, i.e., easily obtainable by apparatus which normally are provided with springs which have a power twenty times as such. This enormous ratio of advantage, of course, operates also in favour of a high sensibility of the reducer in order to perceive, as soon as they occur downstream even minimum pressure falls e.g. amounting to one or a few metres of water column. The conditions whereby a perfect sealing may be obtained, with such low pressures, go beyond the static features of the ceramic bodies and their perfect and smooth surfaces: a dynamic, perfect and constant matching of the surfaces is required which, each time, must be able to complementary adjust each other in a suitable way. According to the invention suitable suspensions, sealing rings and a spring are provided which axially and in an elastical way thrust the sealing member to match. The force of this spring is additional to that provided by the fluid inlet pressure; however the effect may be optionally adjusted, by reducing either of the contact surfaces.

In accordance with another important preferred embodiment of the present invention, in a pressure reducing valve including a gate valve, the longer sliding necessary to open and close the gate valve is provided by a particular membrane. Such membrane is assisted in its excursion, by a rigid cage, which bilaterally determines the limits, whereby it cannot be overcharged even if serious drawbacks would occur. In accordance with this preferred embodiment a pneumatic or aeolian propeller of the pressure reducing valve, is provided. Such propeller directly or from a remote place is adapted to perform its action against the back of said membrane, by a fluid through a valve. The pressure of such fluid may be adjusted substantially, only once, in agreement with the pressure wanted downstream. It is to be noted that, the use as propeller of the gate valve of a spiral spring of conventional length, to obtain a longer excursion would have result in a pressure fall in the range of 25%. To avoid the use of exceptionally long springs, in accordance with the present invention a pneumatic spring was provided, by which substantially at parity of dimensions of the body containing the elastic means, the pressure change, during the excursion, fall to a ninth i.e. to 3%. Moreover in case that, for particular aim, higher constancy are wanted, tanks, possibly remote tanks, with enough capacity, may nullify the pressure changes during the excursion. All these arrangements provide a sliding sealing coupling system, wherein in order to minimise the friction, particular suspensions have been studied, whereby to assure substantial indifference towards: 1) the pressure changes upstream of the sealing coupling; 2) the constancy of resistance to the automatic operation with constant response apart from the various condition of worth; 3) the presence in the liquid of alien bodies even in the form of micro-bodies, which are not any longer put in evidence by the undesired action of filtering, instead operated by the obturator kind sealing coupling; vice versa the same are rejected and kept waiting for the opening to occur. When this happens, immediately the alien bodies may pass over without disturbing the coupling and its operation. This is the reason why in case of application of the gate valve to a pressure reducing valve, the filtering of the solid particles is not needed any longer upstream as in the obturator reducing valves. When such filtering is needed downstream thereof, the filter could be provided downstream and only for the user need or preference and not for operation reasons. Thus it is possible to place the filter downstream and only to the supply optionally selected by the, avoiding to filter all the liquid, also in consideration that, in general, the main consumes does not need any filtering. Thus, also the particular filters and their control are taken off from the centrality of the system, whereby more users may provide the filters according to their respective task and responsibility. However in case that both the pressure reducing valve, and the valves downstream therefrom, include gate valves according to the present invention filters and filtering can be completely eliminated.

Given:

P$_o$ = Inlet Pressure;
P$_r$ = Adjusting pressure;
P$_1$ = Outlet pressure;
P$_{1'}$ = Outlet pressure, on opening;
P$_{1''}$ = Outlet-pressure, on closure;
$_e$P = Pressure Error;
S = Post Surface;

S$_1$ = Surface of the driving member;
C$_A$ = Friction coefficient;

The friction reduction is evidentiated by the following formulae:

$$P_{1'} = P_r - \backslash F(P_o * S * C_A, S_1);$$

$$P_{1''} = P_r + \backslash F(P_o * S * C_A, S_1);$$

$$eP = P_{1''} - P_{1'};$$

$$P_1 \leq P_o = P_r \pm \backslash F(P_o * S * C_A, S_1).$$

Ways of carrying out the invention are described in detail below with reference to drawings which illustrate only specific embodiment of the valve and of the reducer, in a schematic and merely explicating fashion.

Figure 1 shows the operation principle scheme of a conventional tap or valve.
Figure 2 is a repetition of Figure 1, but regarding a conventional pressure reducing valve.
Figure 3 is a schematic cross-section view of a tap or valve fitted with sliding gate in accordance with the present invention.
Figure 4 is the schematic cross-section view of the pressure reducing valve as shown in Figure 2, including the valve of Figure 3 in accordance with the present invention.
Figure 5 a schematic cross-section view of the device shown in Figure 2, comprising the control or self-control device in accordance with the present invention, which qualify it as reducer valve.
Figure 6 shows, in cross-section, schematically too, a synthesis of figures 4 and 5, wherein the pressure reducing valve is shown in closed condition, whereas in figures 4 and 5, the devices are shown in open position.
Figure 7 is a perspective view, in an enlarged scale, partially in cross-section or broken, substantially of figures 3 and 4, but in knocked down attitude and substantially in a constructive fashion; the case being shown in phantom lines.

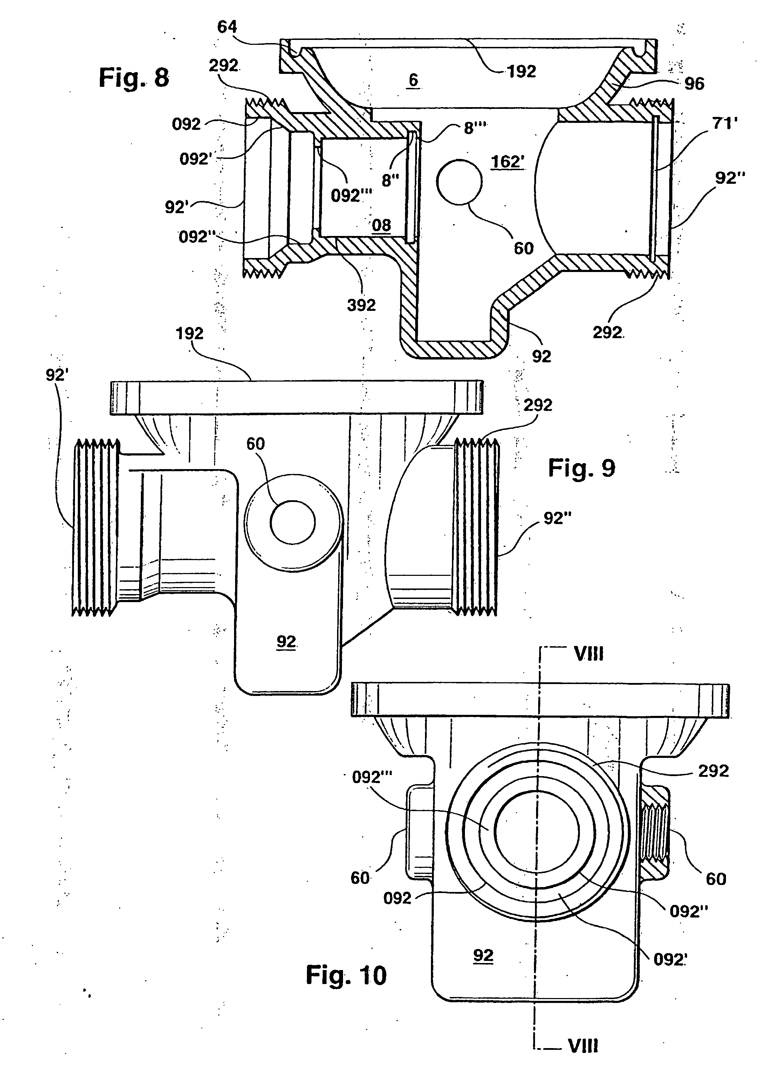

Figure 8 is an axial cross-section view, in a slightly enlarged scale, taken along the line VIII-VIII of the valve case according to the present invention; the case is adapted to provide both a valve, and a pressure reducing valve. In the same Figure are shown the working steps providing the process. In particular, the linear attitude of the valve results in a simplification of the working to be made thereon and of linearity of the flow and of its control, substantially frictionless, both in. relation to flowing of liquid and solids carried thereby.

Figure 9 is a frontal view of the case of Figure 8.

Figure 10 is a side view of the case of figures 8 and 9, better Figure 8 is a cross-section of Figure 10 taken along the line VIII-VIII of same Figure 10.

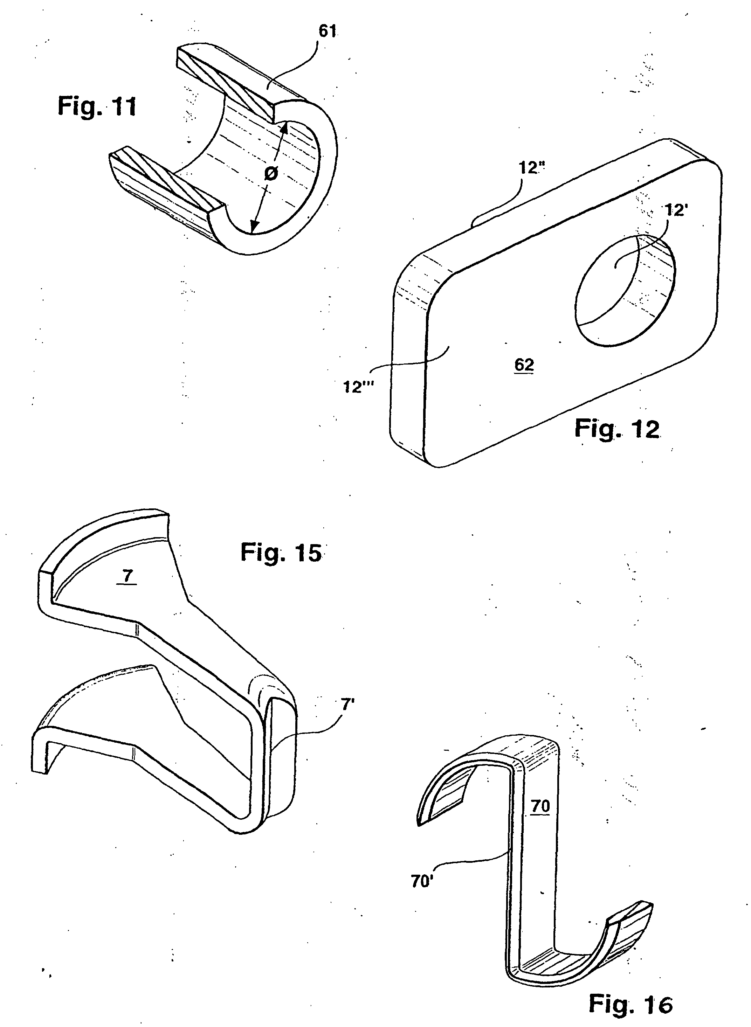

Figure 11 shows, in perspective view, partially in elevation and partially in axial cross-section, in a slightly enlarged scale, a ceramic sealing sleeve according to the present invention, which characterises the stationary member of the gate seal, both of the valve, and of the pressure reducing valve.

Figure 12 is the perspective view of the ceramic movable member, in a slightly enlarged scale, according to the present invention, which characterises the gate seal, both of the valve and of the pressure reducing valve.

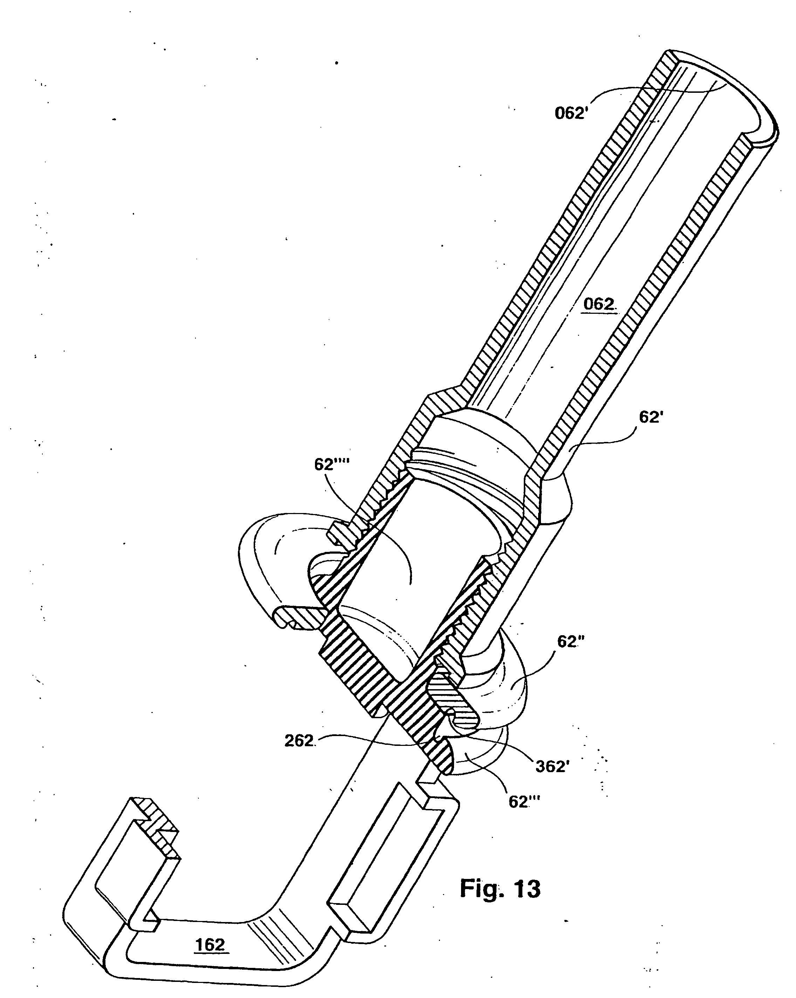

Figure 13 is the perspective view, partially broken, in an enlarged scale, of the frame unit of plastic material holding ceramic movable member, shown in Figure 12.

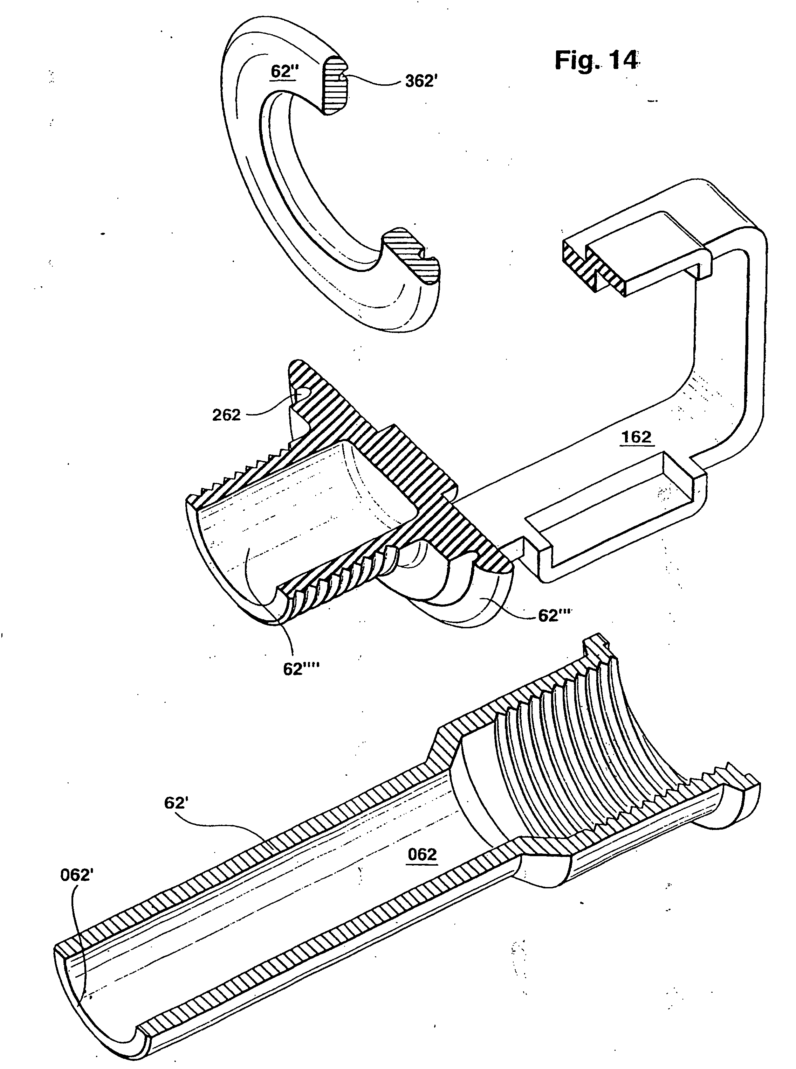

Figure 14 is the perspective view in an enlarged scale, of the frame of plastic material of Figure 13, comprising three members, in order to be easily obtained by injection moulding.

Figure 15 is the perspective view, in an enlarged scale, of the holding segment supporting the ceramic movable member. It is made by blanked and formed metal sheet.

Figure 16 is the perspective view of the hinging wedge of the holding segment. It is made by blanked and formed metal sheet.

Figure 17 is the perspective view of the seal or membrane.

Figure 18 is the perspective view top halfshell providing the holder of the seal or membrane, the bottom halfshell being integral with the case of figures 8, 9 and 10.

Figure 19 is the perspective view of the upper shell, which is filled at least in part with fluid, particularly gaseous in order to render elastic the automatism.

Figure 20 is the perspective view of a pneumatic valve with free inlet and controlled outlet, adapted to load and discharge the gas.

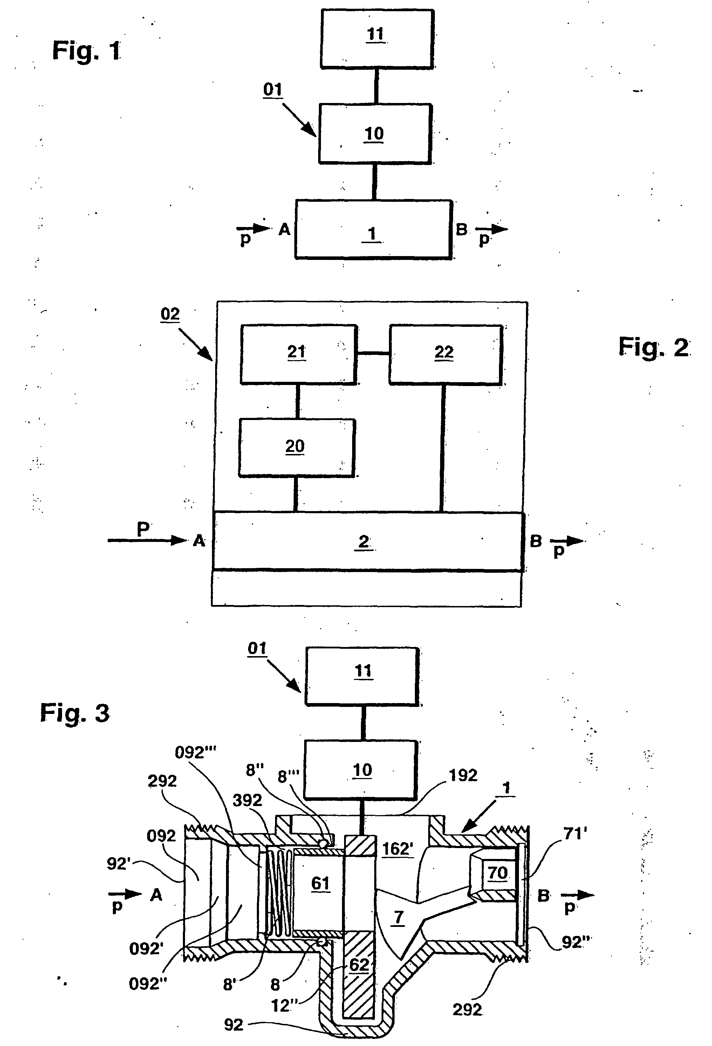

Referring now to Figure 1 of the drawings, a valve or tap 01 conventionally comprises: a valve-valve seat arrangement 1, a packing 10 and a control device 11. The liquid to be controlled flows from A with the pressure shown by the arrow P, with a virtual flow Q and outlets from B substantially at the pressure p = P and with vitual flow q < Q, not shown. As set forth in the foreword, the conventional valve-valve seat arrangements 1 are predominantly of the kind in which the valve lift and fall vertically from and. to their seat. However, even the conventional ones which open and close by sliding on and parallel to their seats have the drawbacks set forth in the foreword too.

Referring to Figure 2 of the drawings the pressure reducer 02 conventionally comprises, the same members as the valve or tap 01, i.e., valve-valve seat arrangement 2, a packing 20 and a control device 21. However, in addition, it comprises a self control lift 22 which operates in agreement with the control device 21. As a result of this combination, the liquid to be controlled flows from A at the pressure indicated by the arrow P and flow Q, not shown, and outlets from B at pressure p < P and flow Q, not shown. As set forth in the foreword the generality of conventional sealing coupling 1, included in conventional pressure reducing valves, are of the obturator kind i.e. those in which the cover member lift an fall vertically from and to its seat member. The reasons why in the Figures 1 and 2 it is not shown the maximum outlet flow, is due to the fact that, in the tap and in the conventional reducer including a valve of the obturator kind, it is a depending variable, while in. a gate sealing coupling it, at least in the pressure reducing valve, corresponds about to the inlet flow.

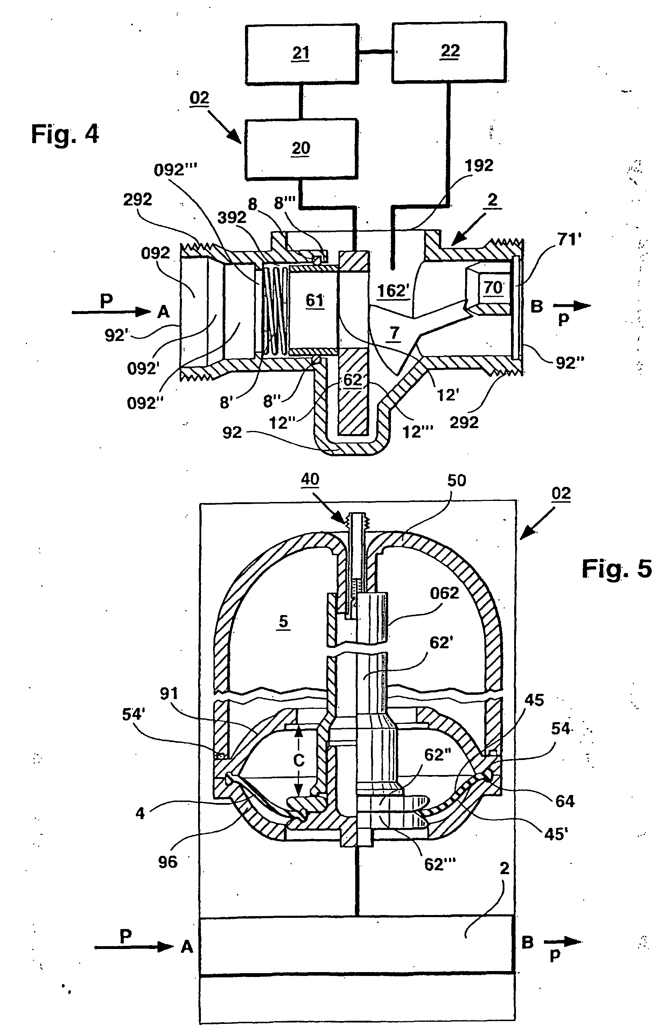

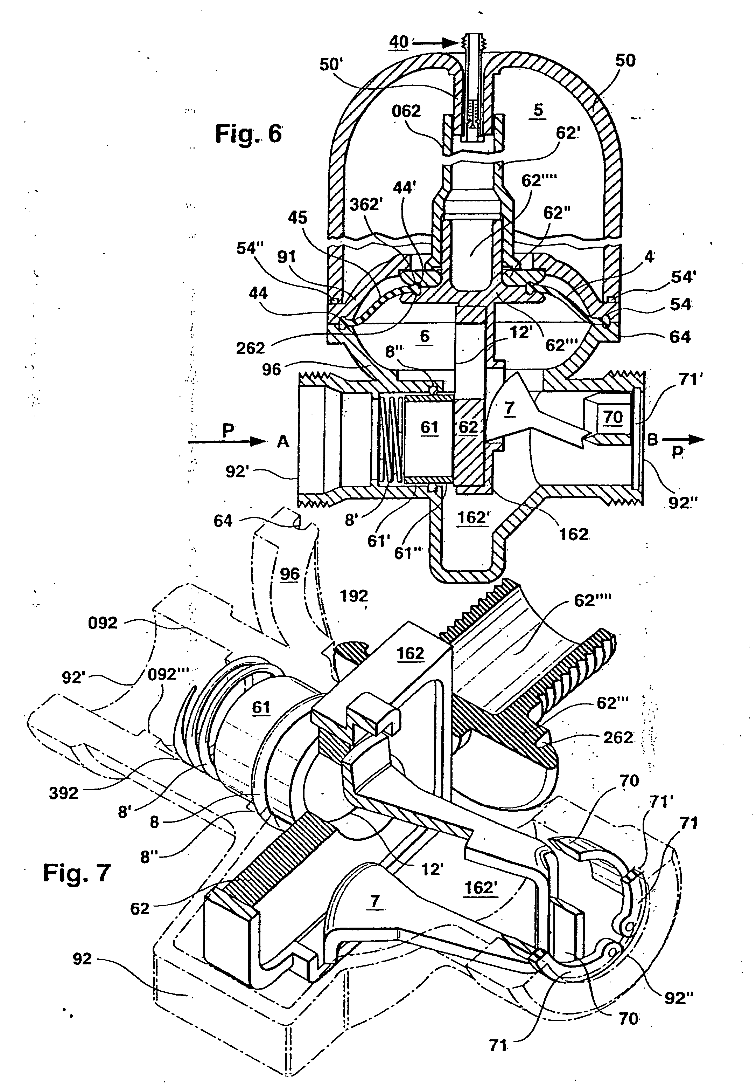

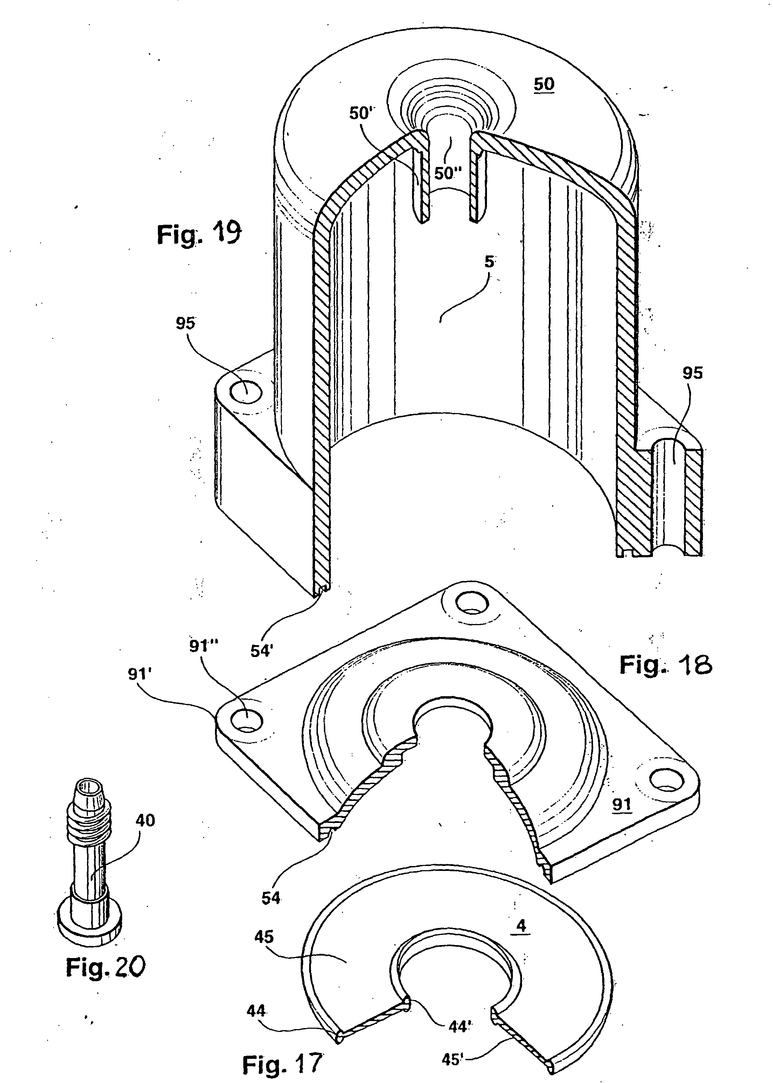

According to the present invention (figures 3, 4, 6) the valve 0.1, 02 is of the kind which open and close by sliding of the valve 1, on and parallel to its seat 2. Just this kind of opening renders corresponding the outlet flow Q to the inlet flow. The drive 21, in connection with the automatic control of the pressure reducing valve 02, is of the kind shown in figures 5 and 6. Valve and control are particularly adapted to be used singularly (figures 4 and 5 or jointly (Figure 6). The gate valve 1, 2, according to the present invention, is comprised by: a substantially "T"-shaped case 92; a substantially parallelepiped gate 62; a sleeve-like seal 61; a spring 8'; a sealing ring 8 so said "O" ring, providing the seal between the case 92 and the sleeve 61; a thrust bearing segment 7; a fulcrum post or wedge 70 providing a coupling with the fulcrum seat 7' of the thrust bearing segment 7 and an elastic circlip ring 71 so said "Seeger", providing a shoulder to the fulcrum post or wedge 70. The case 92, as aforesaid, is a "T"-shaped nipple-like fitting, wherein the inlet 92' and the outlet 92" are aligned and the normal opening 192 is reserved to the control, to be described further. The inlet 92' is tubular and is provided externally with a thread 292 and internally has a hole comprising seven sections: 092, 092', 092", 092''', 392, 8", 8'''. The first section 092 is a cylindrical entrance, and then a section 092' truncate conical, followed by a smaller cylindrical section 092", and then a shoulder section 092''', adjacent to a cylindrical section 392 which is precisely worked and terminate with a small groove 8", closed by a very short section 8''', having the same diameter of section 392, The outlet hole 92" is cylindrical and its diameter is larger than that of the inlet hole and is interrupted close to its end by a narrow groove 71' provided to receive the elastic circlip ring 71. Between the inlet hole 92' and the outlet hole 92" there is the room 162' in which slides free the gate 62 or movable valve member. The gate 62 or movable valve member, is made of ceramic and, as aforesaid, is of parallelepiped shape; however it is fitted in a frame 162, in order to be easily controlled. It is provided with a hole 12' having the same diameter than the sleeve 61. to be described later on. One of its main surfaces 12", 12"' i.e. that 12", adjacent to the sleeve 61, is finished in an exceptionally smooth, flat and precise fashion. The frame 162 receives, therein, the member 62 and the resulting unit, in axial direction to the hole, is free normal. The frame 162 comprises the valve driving member, i.e. the member to which is to be connected a drive: simple, in the case of a tap or complex and automatic, in the case that a pressure reducing valve is regarded. Since in particular the frame 162 is integral with the specific driving member 62"" of same or driven by the control device 4; such driving member 62"" and the means connected thereto Will be described, each time, with reference to both the tap and to the pressure reducing valve. The sleeve 61 is also made of ceramic material and its surface engaging the corresponding surface of the gate 62 is levigated and perfectly matching it. The inner diameter of the hole 062' provided in the sleeve 61 corresponds to that 12' provided in the gate 62. The outer diameter of the same sleeve 61 is smaller than the diameter of the section 392 of the hole 92'. Thus the section 61' of the sleeve 61, which is upstream of the sealing ring 8, is immersed in a room 08, wherein there is a balanced pressure fluid. Thus it is not uselessly exposed to pressures which could break it. Omitting at this stage to describe the control member 11, 21, which accordingly is different in relation to the device to which is applied, be it a tap valve (figures. 1, 3) or pressure reducing valve (Figure 2 and 4), the essential pushing (spring. 8') and thrust bearing (segment 7) device will be now described, which is common essential part for any kind of valve. The push device is comprised by the spring 8'; while the thrust bearing device comprises a double segment 7 and its stop 70, substantially diametrical (fig. 16) fulfilling the function of fulcrum post. The segment 7 and the fulcrum post or wedge 70 are both made of metal sheet. The spring 8' is a spiral spring, preferably made by stainless-steel wire, whose features are such as to provide a power comprised between Kg 3 and Kg 6. Its outer diameter is smaller then the inner diameter of the section 392 of the hole 92' and its inner diameter is the same or larger than the inner diameter of the shoulder section 092"'. During. the assembling step firstly is mounted the spring 8', thereafter the seal 8 is set within the groove 8" and then the sleeve 61 is mounted. Then the segment 7 is parked within the room 162', waiting for the substantially contextual, from one hand of the gate 62, which is inserted through the top, and from the other hand, of the fulcrum post or wedge 70, which is inserted. from the hole 92". Finally the circlip 71 is fit into the narrow groove 71'. Such assembling does not involve any particular problem of spacing, since possible differences are compensated by the spring 8', which performs, in its excursion of a few mms, the chosen constant power, which is such to provide the sealing contact between the matching surfaces of the sleeve 61 and of the gate 62.

The automatic lift control, to be used to provide a pressure reducing valve may be any of the known controls, keeping in mind that the stroke of a gate valve is longer than that of a valve of the obturator kind.

The conventional automatic lift control of a pressure reducing valve, having to solve a problem of action and reaction with. movement, acting, from one side under the thrust (of sealing coupling) of the pressure to be reduced and from the other side under the (opening) thrust of a spring, may be in the form of cylinder-piston or of membrane. The membrane conventional control device comprises a membrane 4, means 91, 96 to fasten such membrane to a stationary body, means 062.... to fasten such membrane to a movable body and a spring 5. The membrane 4 is particular, i.e. made of material possibly elastomeric, but anelasticized, possibly by a texture of cloth. The membrane structure, adapted to perform a stroke in a pressure environment, has annular shape and is substantially "S"-like in cross-section, wherein the performance of the stroke changes such cross-section from a shorter width to a longer one. To use such a conventional membrane in the present case, where a longer stroke is necessary is not advisable, since otherwise a enervation with destroying of the membrane also due to rubbing against the guiding members often imprecise an co-operating with a spiral spring, would early occur.

According to a preferred embodiment of the present invention the membrane 4 is totally made of elastomeric material, maximally deformable, possibly of lattice, since it must each time, change, counterpoising the minimum reaction, from the concave attitude or vice versa to the convex attitude or vice versa, matching, each time, with its opposed main surfaces, the corresponding concave surfaces of the duly provided supporting shell, in order to assure the accomplishment of at least a few millions of operations of closing and opening. To increase this propensity to change from the concave attitude to the convex one and vice-versa a relatively forced fitting of the membrane 4 is provided, wherein the inner circular edge, which at rest has a shorter diameter, is forced by jaws of longer diameter, while the outer circular edge, which at rest has a longer diameter, is forced by jaws of shorter diameter. Such an arrangement provides a synergistic system, with which the energy consuming in the mechanic and structural components is reduced. Such reduction results in. a quickening of the two main attributes of a pressure reducing valve i.e. the response speed and the pressure difference between the power of the spring and the outlet pressure available at the outlet.

According to another preferred embodiment of the present invention, acting on the aeolian face 45 of the membrane, with spring function, is the air 5 having an iperatmospheric pressure, which is filled in a tank. 50 through a valve 40 per se known, such as a valve for vehicles tube and comprising the upstream or aeolian. face 45 of the membrane 4. The pneumatic action directly provided on the membrane 4 by the gas 5, in accordance with the Pascal principle, permit to govern a gate valve according to the present invention by a minimum differential pressure comprised between 1 and 6 m of water column. Moreover, it is possible, in practice and not only theoretically, as happen. in the conventional pressure reducing valves to continuously control, the pressure on the hydraulic face of the membrane 4, clean of the differential pressure, from a minimum, slightly exceeding such differential and a maximum substantially corresponding to an upstream pressure P, with the practical effect to disactivate the reducer in case of need, such as that of using the downstream tubing connected to the outlet B, as hydrant or the like at net: flow Q and pressure P. Thus, in case that the control is made supplying air 5 with a pump, not shown, provided with a manometer, non shown; by the two readings of the two manometers: that of the pump, fitted in one of the bores 60 of the downstream room 6 of the valve or respectively of the hydraulic face of the membrane and possibly a third manometer connected to the net a reading of the pressure available, of the differential pressure and of the effective response of the valve on the downstream net. Simply the mere control of the manometer applied to the downstream room 6 of the valve or of the hydraulic face of the membrane, permits to appraise at any time, the pressure available or the present condition of the aeolian spring. The membrane 4 is in the form of circular crown and is provided at the inner and outer edges thickened by ribs 44, 44' projecting from both sides; such ribs are engageable by pairs of flanges each of which includes a corresponding groove 54, 64, 262, 362'. The radial cross section of the membrane 4 is made in the form of bracket i.e. with a thickness centrifugally decreasing.

Thus the membrane 4 is the interface between the aeolian room 5 and the hydraulic-room 6 i.e. between the stationary members 96, 91, 50, and the cinematic members 062, 62", 62'''. The cinematic members, of course integral with the movable body 62 of the valve, comprise: from one side, in radial direction parallel to the longer sides of the rectangle the same frame 162 formed as a flange 62''' with particular shaping to be described later on. Axially projecting from the flange 62''' there is a sleeve 62'''' which is externally threaded. The flange 62''' and the threaded sleeve 62'''' co-operate with corresponding antagonist members. In particular the flange 62''' cooperates with a counterflange 62" in order to fasten between them and in particular between their halfgrooves 262 and 362' the internal thickened edges 44' of an annular membrane 4. The fastening is provided by a tubular stem 62', internally threaded, which is screwed on the externally threaded extension 62'''' of the frame 162. The tubular stem 62', at the upper end is provided with a cylindrical hole 062', which may be fitted outside of an axial sleeve 50' descending from the shell 50 of the control device 22. Such coupling consents the reciprocal sliding in order to guide the gate 62 in its excursion.

The stationary members comprise: a case 50, a flange 91, which co-operate with flange 96 which is substantially symmetric with the flange 91. The shell 50 is also provided with a valve 40. The case 50, as shown in the figures 5, 6 and 23, has substantially the shape of a bell and at its bottom is fitted with four flange-like angles, duly bored to receive the screw for fastening it to the halfshell 91. In the upper part of the bell-like shell 50, is internally provided with descending attitude a tubular stem 50' forming a sole body with the case 50. The tubular stem 50' substantially performs two functions: in the internal hole 50" receives the valve 40, of which it will be spoken later on; while with its external cylindrical surface guides the upper end of the tubular stem 062 by fitting to its cylindrical hole 062'. In correspondence of the surface of base the shell 50 is provided with a groove 54 for a sealing member 54". According to a preferred embodiment of the present invention the case 50 is made of plastic material and particularly of a superpoliammidic resin, particularly reinforced with glass fibres. The flange 91 is of the same material and is provided it too with angles 91' and with bores 91" which are complimentary to those 95 of case 50. On the main backward surface is provided a groove 54.

The operation of the arrangement, should be self-explaining from what described heretofore; however a short description will be given in the following. Supposing a pressure reducing valve, of the kind in accordance with the present invention shown in the figures 4 and 6, the nipple, A, i.e. 1 1/4" GAS, is connected to the net, wherein stands a pressure $Po_o$, i.e., of 10 atmospheres. Immediately the gate, which at the beginning was in the position shown at Figure 4, moves to the position of Figure 6, since the pressure of 10 atmosphere acts on the membrane 4, changing its attitude from upwardly concave as shown in Figure 5, to upwardly convex as shown in Figure 6, such pressure not being backed by any antagonist pressure. In the described conditions, the manometer, not shown, fitted to one of the bores 60 of the downstream room 6 of the valve i.e. of the hydraulic face of the membrane, would read 0. In fact the liquid which, at the beginning, by virtue of its incompressibility lifted the membrane and members connected thereto, as soon as the gate provided the sealing coupling, the liquid, not urged any more: or remained stagnant in the hydra-room 6 or discharged, by one of the downstream taps, not. shown. In these conditions the pressure performs:

1) on the circular corona which is the forward surface adjacent to the spring 8', this pressure is backed directly by the gate and indirectly respectively by the segment 7, by the fulcrum post or wedge 70 and by the circlip ring 71;
2) on a section of the external cylindrical surface of the sleeve 61 i.e., up to the limit provided by the seal 8;

3) on the whole cylindrical surface of the hole of the sleeve. With the result that the centrifugal pressure acting on the sleeve section, which is downstream the seal 8, not balanced by the centripetal pressure, has the trend provide an explosion of the same sleeve; this is a limit for the sleeve whose wall thickness cannot be reduced under a certain range;

4) on a section of the forward surface of the gate corresponding to the area of the circle of the hole $\phi$ of the sleeve 61. This pressure is backed directly by the segment 7 and indirectly respectively, by the fulcrum post or wedge 70 and by the circle ring 71 which co-operate engaging their contact lines 7' and 70'.

Once that the gate has reached the end of its stroke remains in such position, there being kept by the friction even if the same is minimised by arrangements materialising the following formula:

$$P_{1'}= P_r\text{-}\backslash F(P_o * S * C_A, S_1);$$

$$P_{1''}= P_r\text{+} \backslash F(P_o * S * C_A, S_1);$$

$$eP= P_{1''}\text{-} P_1;$$

$$P_1 \leq P_o = P_r \pm \backslash F(P_o * S * C_A, S_1).$$

wherein:

$P_o$ = Inlet Pressure;
$P_r$ = Adjusting pressure;
$P_1$ = Outlet pressure;
$P_{1'}$ = Outlet pressure, on opening;
$P_{1''}$ = Outlet-pressure, on closure;
$_eP$ = Pressure Error;
S = Post Surface;
$S_1$ = Surface of the driving member;
$C_A$= Friction coefficient;

To remove the gate 62, from this dead condition of sealing coupling, is necessary to provide, on the aeolian face 45 of the membrane 4, a pressure suitable at least to overcome the friction and preferably superior, such to provide the pressure $P_1$ to be delivered by pressure reducing valve. For this provision a gaseous fluid under pressure is loaded through the valve 40 or into the aeolian room 5. Each pressure increase in the aeolian room 5 provides an adjustment of pressure in the hydraulic room 6. Then the air is pumped into the valve 40 until the manometer, not shown, reads the pressure $P_1$ to be delivered. Thus, each tap opening in the downstream system, results in a liquid outlet at the right p pressure.

## Claims

1. Gate valve, particularly adapted to be combined with a control for its automatic operation in a pressure reducing valve, said gate valve being of the kind comprising:

   — a gate sealing coupling including ceramic members (61, 62) and at least a spring (8'),
   — a compensation device (7, 70, 71),
   — a sealing device (4), and
   — when embodied in an automatic pressure reducing device, a control device (22) comprising at least a spring (5),

   **characterised in that**:

   a) each of the ceramic members (61,62) of the gate sealing coupling is provided with a single passage hole (12', f), said passage holes cooperating on a stroke,
   b) the compensation device (7, 70, 71) is mechanic and comprises at least a segment (7) in order to transform the sliding friction, resulting from the pressure (P) on the sealing members (61, 62) in axial direction, in a rolling friction in a direction normal to the same pressure (P),
   c) the sealing device comprises a membrane (4) and **in that**
   d) the control by said control device (22) take place through the membrane (4) on whose main surfaces (45, 45') respectively aeolian and hydraulic pressures act preponderantly balanced, wherein the component driving the membrane (4) in both directions is merely the differential pressure sufficient to compensate the operating friction.

2. A gate valve (1, 2), as claimed in claim 1, that, comprises a case (92) substantially a "T", a gate (62) substantially parallelepiped, a sleeve-formed seal (61), a spring (8'), a sealing ring (8) of the kind so said "O" ring, providing a seal between the case (92) and the sleeve (61), a backing segment (7), a fulcrum post or wedge(70) providing a coupling with the antagonist fulcrum (70') of the thrust bearing segment 7 and a ring (71) elastic so said Seeger providing a shoulder to the fulcrum post or wedge (70); the case (92) being in the form of "T" pipe fitting whose inlet (92') and outlet (92") are aligned and the normal opening (192) is devoted to the control members, the inlet (91') being tubular and having an outer thread (292) and internally a hole comprising seven sections (092, 092', 092", 092''', 392, 8", 8''').

**3.** A gate valve (1, 2), as claimed in claim 2, in that the first section (092) is a cylindrical entrance and then the section (092') in the form of a truncated cone, followed by a smaller cylindrical section (092"), and then by the shoulder section (092'''), adjacent to a precise cylindrical section (392), which ends with a narrow groove (8") closed by a very short section (8") of the same diameter of the section (392), the outlet hole (92") is wholly cylindrical and has diameter which is larger than that of the inlet hole (92') and is interrupted, close to the end, by the narrow groove (71') fitting the elastic ring (71), between the inlet hole (92') and the outlet hole (92") being provided, a room (162') wherein the gate (62) or movable valve members free of sliding.

**4.** A gate valve (1, 2), as claimed in claim 1, in that the gate (62) is made of ceramic, has parallelepiped shape and to the effect of its control is mounted in a frame (162), it is provided with hole (12') of the same diameter of the sleeve (61), wherein one of its main surfaces (12", 12''') i.e., (12") the surface adjacent to the sleeve (61) is finished in lapped, flat and precise fashion.

**5.** A gate valve (1, 2), as claimed in claim 1, in that the frame (162) receives, therein the member (62) and. the resulting unit, in axial direction to the hole, is normal free, wherein the frame (162) comprises the valve driving member, i.e. the member to which is to be connected a drive: single in the case that a tap is concerned or complex and automatic in the case that a pressure reducing valve is concerned.

**6.** A gate valve (1, 2), as claimed in claim 1, in that the frame (162) is integral with its specific driving member or driven by the control device of such driving member and parts connected thereto.

**7.** A gate valve (1, 2), as claimed in claim 1, in that the pushing device is provided by a spring (8'); while the thrust bearing device comprises a double segment (7) and a stop (70), substantially diametrical (fig. 16) fulfilling the function of fulcrum post.

**8.** A gate valve (1, 2), as claimed in claim 1, in that the segment (7) and the fulcrum post or wedge (70) are both made of metal sheet.

**9.** A gate valve (1, 2), as claimed in claim 1, in that the spring (8') is a spiral spring preferably made of stainless-steel wire whose features are such as to provide a power comprised between Kg 3 and Kg 6, its outer diameter is smaller than the inner diameter of the section (392) of the hole (92') and its inner diameter is the same or is larger than the inner diameter of the shoulder section (092''').

**10.** A gate valve (1, 2), as claimed in claim 1, in that the attitude of the membrane (4) adapted to perform a stroke in a pressure environment has annular shape and is substantially "S"-like in cross-section "S", wherein in the course of its stroke such cross-section changes from a shorter width into a longer width.

**11.** A gate valve (1, 2), as claimed in claim 1, in that the membrane (4) is totally made of elastomeric material, maximally deformable, possibly of lattice, since it must each time, change counterbalancing the minimum reaction from the concave attitude or vice versa to the convex attitude or vice versa, matching each time with its main opposite surfaces (45, 45') the corresponding concave surfaces of the duly arranged holding shells (62", 62'''), in order to assure in the life of the membrane the performance of at least a few millions of valve operations of closing and opening.

**12.** A gate valve (1, 2), as claimed in claim 1, in that to exalt the propensity al pass from the concave attitude to the convex and vice versa is provided a relatively forced fitting of the membrane (4), wherein the inner circular edge (44') which at rest has a. shorter diameter is compelled by jaws (262, 362') of longer diameter while the outer circular edge (44) which at rest has a longer diameter is compelled by jaws (64, 54) of shorter diameter, providing a synergetic system, whereby the economy of energy operate in the mechanic and structural components has the effect to increase the response and to better the pressure differential between the force of the spring (5) and. the outlet pressure available at the outlet mouth (92").

**13.** A gate valve (1, 2), as claimed in claim 1, in that acting on the aeolian face (45 ) of the membrane (4) with a spring performance is the air (5) having an iperatmospheric pressure, filled in a tank (50) to be supplied by a valve (4), per se known, such as a valve for tubes of vehicles and comprising the upstream or aeolian face (45) of the membrane (4).

**14.** A gate valve (1, 2), as claimed in claim 1, in that the pneumatic action provided directly on the membrane (4) by the gas (5), according to, the principle of Pascal, consent to control a gate valve (2) with a minimum pressure differential ranging between 1 and 6 m of water column, providing the possibility to adjust, continuously in the time and quantity, the pressure on the hydraulic face (45') of the membrane (4) clean of the pressure differential, from a minimum, slightly exceeding such differential and a maximum substantially corresponding to the reducer upstream pressure P, with the practical effect to disactivate the pressure reducing valve in case of need, such as using the downstream system connected to the outlet mouth (B, 92"), as hydrant or the like having flow Q and net pressure P.

15. A gate valve (1, 2), as claimed in claim 1, in that the membrane (4) in plane view has the form of circular corona and has its external and internal circular edge thickened by a rib (44, 44'), which projects from both sides, whereby such ribs are flange pairs (62", 62'"; 91, 96) each of which is provided with a corresponding groove (262, 362'; 54, 64) and its radial cross-section is made in the form of bracket i. e. with a centrifugally decreasing thickness.

16. A gate valve (1, 2), as claimed in claim 1, in that the membrane (4) is interface between the aeolian room (5) and the hydraulic room (6) i.e., between the stationary (96, 91, 50) and cinematic (062, 62", 62'") parts, wherein the cinematic parts, solidary with the movable body (62) of the valve (2); comprise from one side, in radial parallel direction to the longer sides of the rectangle of the same frame (162), which is shaped as a flange (62'") of particular fashion, wherein axially projecting from the flange (62'") there is a sleeve (62"") which is externally threaded, the flange (62'") and the threaded sleeve (62"") co-operating respectively with corresponding antagonist members.

17. A gate valve (1, 2), as claimed in claim 1, in that the flange (62'") cooperate with a counterflange (62") in order to fasten between them and in particular between their halfgrooves (262 and 362') the internal thickened edge (44') of an annular membrane (4), the fastening being provided by a tubular stem (62') which is internally threaded whereby it is screwed on the externally threaded extension (62"") of the frame (162), wherein the tubular stem (62') at the upper end is provided with a cylindrical hole (062'), fittable to the outside of a sleeve axially descending from the shell of the control device, wherein such coupling allows the reciprocal sliding, whereby to guide in its excursion the gate (62).

18. A gate valve (1, 2), as claimed in claim 1, in that the stationary members comprise a case (50), a flange (91), which cooperate with the flange (96) which is substantially symmetrical to the flange (91), the shell (50) is too provided with a valve (40), the case (50), has substantially the shape of a bell and at its bottom four flange-like bored comers (95) to receive therethrough screws for fastening it to the halfshell (91), in the upper inner part and with descending attitude there is a tubular stem (50') integral with the same case (50), wherein the tubular stem (50') performs substantially two functions: and precisely in the internal hole (50") receives the valve (40), while with its external cylindrical surface guides the upper end of the tubular stem (062) by fitting to its cylindrical hole ( 062').

19. A gate valve (1, 2), as claimed in claim 1, in that in correspondence of the foot surface the shell (50) is provided with a groove (54') for a sealing ring (54").

20. A gate valve (1, 2), as claimed in claim 1, in that the case (50) and the flange (91) are made of plastic material and particularly of superpoliammidic resin, particularly filled with glass fibres, such flange (91) being provided it too with the comers (91') and with the bores (91") which are complementary to that (95) of the case (50). provided on the main opposed surface, a groove (54) being provided too.

## Patentansprüche

1. Schieberventil, im einzelnen für seine Vereinigung mit ein Antrieb für seine Automatikbetrieb zum Druckverminderer geeignet für die Sonderbauart enthaltenden:

   - ein Schieberschlusskupplung mit Keramischbauelementen (61, 62) wenigstens ein Feder (8) einschliessende ,
   - ein Ausgleichvorrichtung (7, 70, 71),
   - ein Dichtigkeitvorrichtung (4), und
   - wo in ein Automatisch Druckverminderervorrichtung eingebaut, ein Steuereinrichtung (22) wenigstens ein Feder (5) enthalten **dadurch gekennzeichnet**:

     a) Jede keramisch Bauelement (61, 62) des Schieberschlusskupplung ist mit ein einzig Entlastungsloch (12', f) versorgt, wo gesagte Entlastungsloch auf ein Hub zusammenwirkt,
     b) die Ausgleichvorrichtung (7, 70, 71) ist mechanisch und enthalt wenigstens ein Kreisabschnitt (7) fähig die Gleitreibung, aus die Druck (P) auf die Dichtheitskomponenten (61,62) in Achsrichtung zeugt, zu umformen in Rollreibung in Senkrechte Richtung zu dieselbe Druck (P)
     c) die Haltungsvorrichtung eine Membran (4) enthält und in dieser
     d) die Betätigung durch gesagte Kontrolvorrichtung (22) durch die Membran (4) eintreten auf dessen grösste Oberflächen (45, 45') beziehungsweise äolisch und hydraulisch Drücken in überwiegenderweise ausbalancierten wirkt, wo die komponente beanspruchten die Membran (4) auf beide Richtungen ist allein das Druckdifferential genügend für die Operativereibungen kompensieren.

2. Ein Schieberventil (1, 2), wie beansprucht in Anspruch 1, welche einschliesst eine Fassung (92), im wesentlichen in Form einer "T", ein Schieber (62) im wesentlichen Parallelepipedon, ein in Buchseform Haltung (61), eine Feder (8'), einer Augenring (8) von die Bauart sogenannt "O"ring, dafür zwischen die Fassung (92) und die Buchseform Haltung (61) ein Dichtigkeit vorsorgte, ein Drucklager Kreisabschnitt (7), ein Stützpunkt Pfosten oder Keil (70) die ein Kupplung mit die gegenwirkende Stützpunkt (70') des Drucklager Kreisabschnitt (7) versorgt und ein Springring (71) sogenannte Seeger ein Anpass für der Stützpunkt Pfosten oder Keil (70) versorgt; wo die Fassung (92) einer "T" Form hat, dessen Wasserandrang (92') und dessen Auslauf (92") in Reihe stellt und die normal Öffnung (192) ist zu Betätigungselementen gewandt, der Wasserandrang (92') röhrenförmig ist und ein ausser Scraubengewinde (292) und innerlich ein Loch enthaltende sieben Ringquerschnitten (092, 092', 092", 092"', 392, 8", 8"') hat.

3. Ein Schieberventil (1,2), wie beansprucht in Anspruch 2, in welche die erste Ringquerschnitt (092) ein zylinderförmig Wasserandrang ist und dann die Ringquerschnitt (092') in Form einer Kegelstumpf, gefolgte aus ein kleiner Ringquerschnitt (092"), und dann aus der Kämpferringquerschnitt(092"'), anstossen an eine präzis Zylindrischringquerschnitt (392), welcher mit ein enge Nut (8") beendt von ein viel kurze Querschnitt (8"') zu mit derselbe Durchmesser wie die Querschnitt (392) der Auslauf (92") ganz zylindrisch ist, und ein Durchmesser hat grösser als die Durchmesser des Wasserdrang (92') ist, und in der Nähe des Ende unterbrecht ist durch die enge Nut (71') sitzende der Springring (71) zwischen der Wasserdrang (92') und der Auslauf (92") ein Raum (162') versorgt ist wo der Schieber (62) oder bewegliche Ventilelement gleiten frei kann.

4. Ein Schieberventil (1, 2), wie beansprucht in Anspruch 1, in welche der Schieber (62) aus Keramic ist, Parallelepipedgestalt hat und für sein Antrieb in ein Rahmengestell (162) angeordnet ist, er mit ein Loch (12') von derselbe Durchmesser des Buchseform Haltung (61) versorgt ist, wo eine seines grösser Oberflächen (12", 12"') und mit Genauigkeit die (12") die Oberfläche anstossen an Buchsform Haltung (61) beendet geläppt ist, eben und Präziseart.

5. Ein Schieberventil (1,2), wie beansprucht in Anspruch 1, in welche der Rahmengestell (162) dort das Glied (62) erhält, und die resultierende Baueinheit, in axial Richtung gegenüber das Loch, frei normal ist, wo der Rahmengestell (162) das Ventilantriebsglied enthält, daher auch das Glied welcher zusammen mit ein Antrieb hangen muss: einfach im Fall dass es handelt sich um ein Hahn oder komplexe und automatisch im Fall dass es handelt sich um ein Druckregler.

6. Ein Schieberventil (1,2), wie beansprucht in Anspruch 1, in welche der Rahmengestell (162) gänzlich ist mit sein spezifisch Betätigungsglied oder geführt von die Lenkeinrichtung von gesagte Betätigungsglied und Teilen mit er zusammenhangen.

7. Ein Schieberventil (1, 2), wie beansprucht in Anspruch 1, in welche die Schubvorrichtung mit einem Feder (8') versehen ist; während das Drucklagervorrichtung ein doppelkreisabschnitt (7) und eine sperre (70) enthält, im wesentlichen diametral (fig. 16) als Gelenkpunktstiel dient.

8. Ein Schieberventil (1, 2), wie beansprucht in Anspruch 1, in welche der Kreisabschnitt (7) und der Gelenkpunktstiel oder Keil (70) beide aus Blech gemachten sind.

9. Ein Schieberventil (1, 2), wie beansprucht in Anspruch 1, in welche die Feder (8') eine Schraubenfeder ist vorzugsweise aus rostfreie Stahldraht gemachte dessen Merkmale derartig ist aus eine Leistung das sich zwischen 3 kg und 6 kg lösen, sein Assendurchmesser kleiner ist als der Innendurchmesser der Ringquerschnitt (392) des Loch(92') und sein Innendurchmesser gleich oder grosser ist als der Innendurchmesser des Kämpferringquerschnitt (092"').

10. Ein Schieberventil (1, 2) wie beansprucht in Anspruch 1, in welche die Ordnung des Membrane (4) angepasste um ein Hub in einer Druckraum ein Ring-Form hat und im wesentlichen is "S" - wie in Querschnitt "S", wo im Laufe des Strecke so Querschnitt von eine kurzer Weite bis eine langer Weite ändert.

11. Ein Schieberventil (1, 2), wie beansprucht in Anspruch 1, in welche die Membrane (4) ist aus elastomerik Material, hauptsächlich mit Verformbarkeit möglicherweise aus Latex gänzlich gemacht, da jeden Augenblick muss ändern die mindest Reaktion von die konkav Ordnung oder umgekehrt bis konvex Ordnung oder umgekehrt, ausgleichend jeden Augenblick mit seinen grösser gegenübergestellten Oberflächen (45, 45') die entsprechende konkav Oberfläche des regelmässig ordnet gehalten Gehäusen (62", 62"'), um zu versichern in das Membranleben der Betrieb von wenigstens einige Millionen von Öffnungen und Schliessungen des Schieberventil.

**12.** Ein Schieberventil (1, 2), wie beansprucht in Anspruch 1, in welche um die Neigungung der Übergang von die konkav Ordnung oder umgekehrt bis konvex Ordnung oder umgekehrt zu erheben, eine verhältnismässig erzwungen Montage des Membrane (4) beschaft ist, wo der inner Rund-Rand (44') welcher wenn im Ruhe setzt eine kleiner Durchmesser hat, mittels Kluppen (262, 362') von grösser Durchmesser verpflicht ist während der äusser Rund-Rand (44) welcher wenn im Ruhe setzt eine grösser Durchmesser hat, mittels Kluppen (64, 54) von kleiner Durchmesser verpflicht ist, ein Synergetisch-system beschaft, weshalb die Öconomie des Energie handelnd in der mechanisch und strukturell Bauelementen aussehen den Anschein von beschleunigen die Antwort und bessern das Druckdifferential zwischen die Kraft des Feder (5) und der Ablassdruck verfügbar im die Ausmündung (92").

**13.** Ein Schieberventil (1, 2), wie beansprucht in Anspruch 1, in welche was handeln auf die äolisch Oberfläche (45) des Membrane (4) mit eine als Feder Arbeitsweise ist die Luft (5) habende eine Hyperatmosphärendruck, in einer Behälter (50) enthält mittels eine Ventil (40) versorgt, allbekannt, per se bekannt, so dass ein Ventil für Luftreifen des Fahrzeuges und enthaltende die bergseitige äolische Oberfläche (45) des Membrane (4).

**14.** Ein Schieberventil (1, 2), wie beanspucht in Anspruch 1, in welche die pneumatische Bewegung sorge unmittelbar auf die Membrane (4) durch das Gas (5), nach das Pascal Prinzip kontrollieren erlaubt eine Schieberventil (2) mit eine Mindestdruckdifferential einschliesslich zwischen 1 und 6 m vom Wassersäule, verschaffende die Möglichkeit um regulieren,unaufhörlich in der Zeitabschnitt und die Grösse, der Druck auf die hydraulische Oberfläche (45') des Membrane (4) rein aus des Differentielldruck, von ein Minimum, leicht übermässig solcher Differential und ein maximal im wesentlichen entdprechend zu Druckverminderer bergseitig der Druck P mit praktisch Wirkung zu entaktivieren das Druckminderungsventil nötigenfalls, wie so tun das Talumlaufsystem zusamgefügten an die Ausmündung (B, 92"), wie Hydrant oder ähnlich einer Zufluss Q und einer Betriebsdruck P habend.

**15.** Ein Schieberventil (1, 2), wie beansprucht in Anspruch 1, in welche die Membran (4) in Grundriss ein Kreisformigkrone ist und seines ausser und inner Kreisrand eindickten sind durch eine Vorsprung (44, 44'), überstehenden von beides Seiten, wo derartiges Vorsprunge mittels Flanschpaare (62", 62"'; 91, 96) jeder deren mit ein entsprechende Rille (262, 362'; 54, 64) versorgt ist ist und seine Radialdurchschnitt ist in Form von Stützarm gemacht das heisst mit ein zentrifugalgemäss abnehmende Dik-

ke.

**16.** Ein Schieberventil (1, 2), wie beansprucht in Anspruch 1, in welche die Membran (4) ist die Innenfläche zwischen die Äolischkammer (5) und die Hydraulischekammer (6) das heisst zwischen die statischen (96, 91, 50) und die kinematischen (062, 62", 62"') Bauteilen, wo die kinematischen Bauteilen, mit der verstellbare Körper (62) des Ventil (2) solidarisch, einschliessend von einer Seite, in radial parallel Richtung zu das langer Seiten des Rechteck derselbe Rahmengestell (162), welcher geformt ist als eine Flansch (62"') mit besonder Art, wo achsenüberstehend aus dem Flansch (62"') dort hat ein Manchette (62"") auf der Aussenseite Schraubt,wo der Flansch (62"') und das Schraubengewindte Manchette (62"") zusammen beziehungsweise mit entsprechenden Antagonist Zwischenglieden wirken.

**17.** Ein Schieberventil (1, 2), wie beansprucht in Anspruch 1 in welche das Flansch (62"') mit ein Gegenflansch (62") mitwirkt um fest zumachen zwischen ihnen und zwar zwischen seines Halbrillen (262 und 362') der inner verdichten Rand (44') eines ringförmige Membran (4), wo die Verschraubung durch einer Rohrstutzen (62') innerlich Schrauben geschneidet versorgt ist welcher auf die äussern Schrauben geschneidet Ausdehnung (62"") aufgeschraubt ist von des Rahmengestell (162), wo der Rohrstutzen (62') auf des höher Ende mit ein zylindrisch Loch (062') versorgt ist, anpassungsfähig auf der Aussenseite eines Muffe axialablaufende von die Kappe des Lenkeinrichtung, wo solch Paarung einwilligt die gegenseitige Abfliessen um im seine Ausschlag der Schieber (62) zu führen.

**18.** Ein Schieberventil (1, 2), wie beansprucht in Anspruch 1, in welche der statisch Glieder enthalten eine Karkasse (50), einer Flansch (91) welcher mit der Flansch (96) zusammenwirkt welcher im wesentlichen gleichförmig mit der Flansch (91) ist, die Kappe (50) mit eine Ventil (40) auch versehen ist, die Karkasse (50), im wesentlichen glockenförmig ist und auf seine Füsse hat vier Flanschenählich durchgebohren Winkel (95) für erhalten Durchgangsschrauben für seine Befestigung an das Halbgehäuse (91), auf dem höherinnere Teil und mit abstammende Trimm dort einer Rohrstutzen (50') ist, zwei Wirksamkeiten im wesentlichen ausführen: und genau in das Innerloch (50") enthalt das Ventil (40), während mit seine Äussernzylindrischeoberfläche lenkt das Höherende des Rohrstutzen (062) anpassungsfähig in seine Zylindrischeloch (062).

**19.** Ein Schieberventil (1, 2), wie beansprucht in Anspruch 1, in welche in das Grundgestelloberfläche die Kokille (50) mit eine Rille (54') versorgt ist für einer Dichtungsring (54").

**20.** Ein Schieberventil '1, 2), wie beansprucht in Anspruch 1, in welche die Fassung (50) und der Flansch (91) sind aus Kunststoff und besonders aus Superpolyamidikharz besonders beschwerte mit Glasfaser, wo gesagte Flansch (91) doch mit die Winkel (91') und mit Löcher (91") versorgt ist welcher komplementär mit deren (95) sind des Fassung (50), versorgte auf der grösste Gegenüberstehendeoberfläche, wo eine Rille (54) versorgt doch ist.

## Revendications

**1.** Robinet-vanne, particulièrement appropriée pour être associée à un commande pour son fonctionnement automatique à réducteurs de pression du type comprenant:

- un accouplement de fermeture à tiroir à composants céramiques (61,62) incluyant au moins un ressort (8'),
- un dispositif de compensation (7,70,71'),
- un dispositif d'étanchéité (4), et
- lorque elle est incorporée dans un dispositif réducteur de pression automatique, un dispositif de command (22) comprenant au moins un ressort (5),

     **caractérisée par** ce que:

a) chacun des composants céramiques (61,62) de l'accouplement du robinet-vanne pourvu d'un seul trou de passage (12',f), où ce trou de passage coopére sur un trait,

b) le dispositif de compensation (7,70,71) est mécanique et comprend au moins un segment (7) capable de tranformer le frottement de glissement dû à la pression (P) sur les composants de étanchéité (61,62) en direction axiale, en frottement de roulement dans la direction normale à la pression (P) même,

c) le dispositif d'étanchéité comprend une membrane (4) et dans celui-ci

d) le command au moyen du dit dispositif de contrôle (22) ait lieu au moyen de la membrane (4) sur les surfaces majeures de laquelle (45,45') respectivement éolienne et hydraulique agissent pression prépondérantment balancées, ou la composante qui active la membrane (4) dans les deux directions est seulement la pression differentielle suffisante à compenser les frottements de déplacements opérationnels.

**2.** Une robinet-vanne (1,2), comme revendiquée dans la revendication 1, qui comprend une carcasse (92) essentiellement en forme de "T" un tiroir (62) essentiellement en forme de parallélépipède, une étanchéité (61) en forme de douille, un ressort (8'), une bague d'étanchéité (8) du type soi-disant "O" ring, faisant étanchéité entre la carcasse (92) et la douille (61), un segment de butée (7), un point d'appui montant ou coin (70) qui fournit une couple avec le point d'appui antagoniste (70') du segment de butée (7) et un anneau ressort (71) soi-disant Seeger faisant fontion d'époulement au point d'appui montant ou coin (70); la carcasse (92) étant en la forme de raccord à "T" ayant sa entrée (92') et sa sortie (92") alignées et l'orifice normal (192) est réservé aux organes de commande, l'entrée (92') étant tubulaire et ayant extérieurement un filetage (292) et intérieurement un trou comprenant sept sections (092,092',092",092''',392, 8",8''').

**3.** Un robinet-vanne (1,2), comme revendiquée dans la revendication 2, dans laquelle la première section (092) est une embouchure cylindrique et depuis la section (092') dans la forme de tronc de cône, suivi par une section cylindrique plus petite (092"), et depuis suivi par la section d'épaulement (092'''), contiguë à une section cylindrique precise (392), qui termine avec une raimure annulaire étroite (8") serrée par une très courte section (8''') ayant le même diamètre de la section (392), l'orifice de sortie (92") est tout cylindrique et a un diamètre qu'est plus grand que ce de l'orifice d'entrée (92') et est interrompu,voisin a la fin, par la rainure annulaire étroite (71') pour le logement de l'anneau ressort (71), étant prévu, entre l'orifice d'entrée (92') et l'orifice de sortie (92"), une baie (162') dans laquelle peut glisser librement le tiroir (62) ou membre movible de la vanne.

**4.** Un robinet-vanne (1,2), comme revendiquée dans la revendication 1, dans laquelle le tiroir (62) est fait de céramique a forme de parallélépipède et aux effets de son commande est monté dans un cadre (162), il est pourvu d'un trou (12') du même diamètre de la douille (61),. où une de ses surfaces les plus grands (12",12''') et précisément la surface (12") contiguë à la douille (61) est planée à la machine à polir en façon fiat et précis.

**5.** Un robinet-vanne (1,2), comme revendiquée dans la revendication 1, dans laquelle le cadre (162) accueille dans son sein le membre (62) et le coupiage résultant, dans la direction axiale au trou, est libre normal, où le cadre (162) représente le membre conducteur de la vanne, donc aussi le membre auquel doit-être relié un commande: simple dans le cas où on doit relier un robinet ou complexe et automatique dans le cas où il s'agit d'une vanne pour la réduction de la pression.

6. Un robinet-vanne (1,2), comme revendiquée dans la revendication 1, dans laquelle le cadre (162) est intégral avec son membre de commande spécifique où commandé par le dispositif de commande de tel membre de commande et parts liées avec ces-si.

7. Un robinet-vanne (1,2), comme revendiquée dans la revendication 1, dans laquelle le dispositif de poussée est pourvu d'un ressort (8'); pendant que le dispositif palier de butée comprend un double segment (7) et un arrêt (70) essentiellement diamètral (fig.16) ayant la fonction de étaçon de pivot.

8. Un robinet-vanne (1,2), comme revendiquée dans la revendication 1, dans laquelle le segment (7) et le point d'appui montant ou coin (70) sont les deux fait de tôle métallique.

9. Un robinet-vanne (1,2), comme revendiquée dans la revendication 1, dans laquelle le ressort (8') est un ressort en spirale fait de préférence de fil d'acier inoxydable les caractéristiques duquel sont ces de produire une puissance comprise entre Kg 3 et Kg 6, son diamètre extérieur est plus petite du diamètre intérieur de la section (392) du trou (92') et son diamètre intérieur est le même ou est plus gros du diamètre intérieur de la section d'épaulement (092''').

10. Un robinet-vanne (1,2), comme revendiquée dans la revendication 1, dans laquelle la dispisition de la membrane (4) adaptée pour garantir un trait dans un environment sous pression a une forme annulaire et elle est essentiellement semblable "S" en section transversal où pendent son trait telle section transversal change de une courte largeur à une largeur plus grande.

11. Un robinet-vanne (1,2), comme revendiquée dans la revendication 1, dans laquelle la membrane (4) est faite totalement de matériel élastomêrique , surtout dédeformable, si cela est possible de latex, du moment que elle doit chaque moment change contrebalance la minime réaction de l'aptitude concave ou vice versa à l'aptitude convexe ou vice versa, égalisant chaque moment avec ses surfaces opposées principales (45,45') les surfaces concaves correspondants des coquilles (62'',62''') tenues régulierement arrangées au but de assurer dans la vie de la membrane d'atteindre au moins quelques millions d'opérations de fermeture et d'ouverture de la vanne.

12. Un robinet-vanne (1,2), comme revendiquée dans la revendication 1, dans laquelle pour exalter la penchant au passage de la disposition concave à la convexe et vice versa prende soin un assemblage relativement forcé de la membrane (4), ou la marge circulaire intérieure (44') qui a repos a un diamètre plus petit est obligée par des mâchoires (262, 362') de diamètre plus grand pendant que la marge circulaire extérieure (44) qui à repos a un diamètre plus grand est obligée par des mâchoires (64, 54) de diamètre plus petit, procurant un système synergetique par où l'économie d'énergie opéré dans les composants mécaniques et structurals ait l'effect de augmenter la réponse et d'améliorer la pression différentiel entre la force du ressort (5) et la pression de sortie disponible à la bouche de sortie (92'').

13. Un robinet-vanne (1,2), comme revendiquée dans la revendication 1, dans laquelle ce qu'agit sur la face éolienne (45) de la membrane (4) avec une fonction de ressort est l'air (5) ayant une pression iperatmosphèrique, comprimée dans un réservoir (50) ravitaillée par une valve (40), par elle même connue, telle qu'une valve pour pneu de véhicules et comprendant la face amont ou face éolienne (45) de la membrane (4).

14. Un robinet-vanne (1,2), comme revendiquée dans la revendication 1, dans laquelle l'action pneumatique exercée directement sur la membrane (4) par le gaz (5), selon le principe de Pascal, consent de contôler une vanne a tiroir (2) avec un differentiel de pression minime compris entre 1 et 6 m de colonne d'eau, pouvant la possibilité d'arranger, en continuation dans le temps et la quantité, la pression sur la face hydraulique (45') de la membrane (4) net de la pression differentielle, d'un minimum, légèrement excédant tel differentiel et un maximum essentiellement correspondant à la pression P amont du réducteur avec l'effet pratique de désactiver la valve de réduction de la pression en cas de besoin, comme ce de utiliser le système en aval connecté à la bouche de sortie (B, 92''), tel qu'une bouche d'eau ou semblable de débit Q et pression de réseau P.

15. Un robinet-vanne (1,2), comme revendiquée dans la revendication 1, dans laquelle la membrane (4), vue en plan, a la forme d'une couronne circulaire et a les marges circulaires extérieur et intérieur épassies par un rebord (44, 44'), qui font saillie des deux côtés dont ces rebourds sont emprisonnables par des couples des brides (62'',62'''; 91, 96) chacune desquelles est pourvue de correspondants rainures (262, 362'; 54, 64) et ses sections radiaux sont faites en form de console, c'est-à-dire avec un épaisseur centrifugalement décroissant.

16. Un robinet-vanne (1,2), comme revendiquée dans la revendication 1, dans laquelle la membrane (4) est l'interface entre la chambre éolienne (5) et la chambre hudraulique (6) ou bien, entre les parties statiques (96, 91, 50) et les parties cinématiques (062, 62", 62''') où les parts cinematiques, solidaires avec le corp movible de la vanne (2), comprendent d'une partie, en direction radial parallèle aux côtés les plus grands du rectangle du cadre même (162), laquelle est conformée en façon de bride (62''') de gabarit particulier, où saillant axialement de la bride (62''') il-y-a un manchon fileté extérieurement (62'''') coopérant avec autant membres antagonists.

**17.** Un robinet-vanne (1,2), comme revendiquée dans la revendication 1, dans laquelle la bride (62''') coopére avec une contre-bride (62") au but de serrer entr-eux et particulièrement entre ses demi-raimures (262 et 362') la marge intérieure épaissie (44') d'une membraneannulaire (4), où le serrage ait lieu au moyen d'une queue tubolaire (62') filetée intérieurement qui est vissée sur l'extension (62'''') filetée intérieurement du cadre (162), où la queue tubulaire (62') a, sur l'extrémité supérieur, un trou cylindrique (062'), connectable sur l'exterieur d'un manchon descendant axialement de la calotte du dispositif de commande, où tel couplage permette le glissement réciproque pour guider le tiroir (62) dans sa excursion.

**18.** Un robinet-vanne (1,2), comme revendiquée dans la revendication 1, dans laquelle les membres statiques comprendent une carcasse (50), une bride (91), qui coopére avec la bride (96) qu'est substantiellement symetrique à la bride (91), la calotte (50) est pourvue aussi une valve (40), la carcasse (50) a substantiellement la forme d'une cloche et à son fond quatre angles trouée (95) à façon de bride pour le passage de vis pour la fixer à la demi-coquille (91), dans la partie supérieur intérieur et avec aptitude descendant il-y-a une queue tubulaire (50') intégral avec la même carcasse (50) où la queue (50') remple substantiellement deux fonctions: et précisémentdans le trou intérieur (50") accueille la valve (40) pendant que avec sa surface cylindrique extérieure guide l'extrémité supérieure de la queue tubulaire (062) s'accouplant à son trou cylindrique (062').

**19.** Un robinet-vanne (1,2), comme revendiquée dans la revendication 1, dans laquelle en correspondance de la surface de base la coquille (50) a un sillon (54') pour une bague d'étancheité (54').

**20.** Un robinet-vanne (1,2), comme revendiquée dans la revendication 1, dans laquelle la carcasse (50) et la bride (91) sont faites de matériel plastique et particuliérement de résin superpolyamidique, particuliérement remplie avec fibres de verre, dit bride (91) étant pourvue elle même des angles (91') et avec les trous (91") qui sont complémentaires aux trous (95) de la carcasse (50), pratiqués sur la surface la plus grande opposée, étant elle-même pourvue d'un sillon (54).

**Fig. 1**

01

11

10

$\overline{p}$ A 1 B $\overline{p}$

02

**Fig. 2**

21 22

20

P A 2 B $\overline{p}$

01

11

10

**Fig. 3**

092'''' 8'' 8'''' 192 1
292 392 71'
092 162'
92' 70
A 61 B $\overline{p}$
$\overline{p}$ 7 92''
092' 292
092'' 8' 8 62
12''
92

**Fig. 4**

**Fig. 5**

Fig. 6

Fig. 7

**Fig. 8**

64
292
092
092'
92'
092''
6
192
8''''
8''
162'
96
71'
92''
092'''
08
60
392
92

**Fig. 9**

192
92'
292
60
92
92''

**Fig. 10**

VIII
292
092'''
60
092
092''
092'
60
92
VIII

Fig. 11

61

Ø

12"

12'

12'''

62

Fig. 12

Fig. 15

7

7'

70

70'

Fig. 16

062'

062

62'

62''''

62''

262

362'

62'''

**Fig. 13**

162

**Fig. 14**

62''  362'

262  162

62''''  62''''

62''''

62'  062

062'  062

Fig. 19

Fig. 18

Fig. 20

Fig. 17